# EUROPEAN PATENT APPLICATION

(11) **EP 4 424 653 A1**
(43) Date of publication of application: **04.09.2024**
(21) Application number: 22886628.1
(22) Date of filing: 05.10.2022
(51) Int. Cl.: C03C 25/42, C03C 25/1065, G02B 6/44

(54) **RESIN COMPOSITION FOR OPTICAL FIBER COATING, COLORED COATING MATERIAL FOR OPTICAL FIBER, AND OPTICAL FIBER**

(30) Priority: 26.10.2021 JP 2021174346
(71) Applicant: SUMITOMO ELECTRIC INDUSTRIES, LTD., Osaka-shi, Osaka 541-0041 (JP)
(72) Inventor: HAMAKUBO Katsushi, Osaka-shi, Osaka 541-0041 (JP); IWAGUCHI Noriaki, Osaka-shi, Osaka 541-0041 (JP); IKEGAWA Miho, Osaka-shi, Osaka 541-0041 (JP); KONISHI Tatsuya, Osaka-shi, Osaka 541-0041 (JP); TOKUDA Chiaki, Osaka-shi, Osaka 541-0041 (JP)
(74) Representative: TBK
(86) International application number: PCT/JP2022/037343
(87) International publication number: WO 2023/074296

(57) **Abstract**

A resin composition for optical fiber coating according to the present disclosure is a resin composition containing a photopolymerizable compound, a photopolymerization initiator, and surface-treated titanium oxide particles, in which a content of the surface-treated titanium oxide particles is 0.6% by mass or more and less than 25% by mass based on the total amount of the resin composition.

## Description

### Technical Field

The present disclosure relates to a resin composition for optical fiber coating, a colored coating material for an optical fiber, and an optical fiber.

This application claims priority to Japanese Patent Application No. 2021-174346 filed October 26, 2021, the entire content of which is incorporated herein by reference.

### Background Art

An optical fiber has generally a coating resin layer for protecting a glass fiber that is an optical transmission medium. The coating resin layer has, for example, a primary resin layer and a secondary resin layer. An outermost layer of the coating resin layer includes a colored resin layer for identifying the optical fiber (see, for example, Patent Literatures 1 and 2).

### Citation List

### Patent Literature

Patent Literature 1: JP H6-242355 A
Patent Literature 2: WO 2016/047002 A1

### Summary of Invention

One aspect of the present disclosure relates to a resin composition for optical fiber coating, the resin composition containing a photopolymerizable compound, a photopolymerization initiator, and surface-treated titanium oxide particles, in which a content of the surface-treated titanium oxide particles is 0.6% by mass or more and less than 25% by mass based on the total amount of the resin composition.

### Brief Description of Drawings

FIG. 1 is a schematic cross-sectional view illustrating an example of an optical fiber according to the present embodiment.
FIG. 2 is a schematic cross-sectional view illustrating an example of an optical fiber according to the present embodiment.

### Description of Embodiments

### [Problems to be solved by the present disclosure]

An optical fiber has been required to have excellent lateral pressure characteristics in order to reduce an increase in transmission loss induced by micro-bend generated when lateral pressure is applied to the optical fiber. An object of the present disclosure is to provide a resin composition and a colored coating material for an optical fiber with which an optical fiber excellent in lateral pressure characteristics can be produced, and to provide an optical fiber excellent in lateral pressure characteristics.

### [Effects of the present disclosure]

According to the present disclosure, it is possible to provide a resin composition and a colored coating material for an optical fiber with which an optical fiber excellent in lateral pressure characteristics can be produced, and to provide an optical fiber excellent in lateral pressure characteristics.

### [Description of embodiments of the present disclosure]

First, the contents of embodiments of the present disclosure will be listed and described.
(1) A resin composition for optical fiber coating according to one aspect of the present disclosure is a resin composition containing a photopolymerizable compound, a photopolymerization initiator, and surface-treated titanium oxide particles, in which a content of the surface-treated titanium oxide particles is 0.6% by mass or more and less than 25% by mass based on the total amount of the resin composition.
   In order to improve the visibility of the optical fiber, titanium oxide is added to the colored resin layer in some cases, but poor dispersibility of titanium oxide in the colored resin layer may cause a decrease in lateral pressure characteristics of the optical fiber. On the other hand, the surface-treated titanium oxide particles are less likely to aggregate in the resin composition and have excellent dispersibility. By using the resin composition according to the present embodiment as an ultraviolet curable resin composition for optical fiber coating, an optical fiber excellent in lateral pressure characteristics can be produced.
(2) In the above (1), from the viewpoint of improving weather resistance, the surface-treated titanium oxide particles may have a surface-treated layer containing at least one selected from the group consisting of aluminum oxide, silicon dioxide, and zirconium dioxide.
(3) In the above (2), from the viewpoint of improving dispersibility, an amount of the surface-treated layer in the surface-treated titanium oxide particles may be 1% by mass or more and 10% by mass or less.
(4) In any one of the above (1) to (3), from the viewpoint of improving visibility, an average primary particle diameter of the surface-treated titanium oxide particles may be 300 nm or less.
(5) In any one of the above (1) to (4), from the viewpoint of adjusting a Young's modulus, the photopolymerizable compound may contain urethane (meth)acrylate and epoxy (meth)acrylate.
(6) A colored coating material for an optical fiber according to one aspect of the present disclosure contains the resin composition described in any one of the above (1) to (5). By using the resin composition according to the present embodiment for the colored resin layer, a coating resin layer excellent in lateral pressure characteristics can be formed.
(7) An optical fiber according to one aspect of the present disclosure includes a glass fiber including a core and a cladding, a primary resin layer being in contact with the glass fiber and coating the glass fiber, a secondary resin layer coating the primary resin layer, and a colored resin layer coating the secondary resin layer, in which the colored resin layer contains a cured product of the resin composition described in any one of the above (1) to (5). By applying the resin composition according to the present embodiment to the colored resin layer, the lateral pressure characteristics of the optical fiber can be improved.
(8) An optical fiber according to one aspect of the present disclosure includes a glass fiber including a core and a cladding, a primary resin layer being in contact with the glass fiber and coating the glass fiber, and a secondary resin layer coating the primary resin layer, in which the secondary resin layer contains a cured product of the resin composition described in any one of the above (1) to (5). By applying the resin composition according to the present embodiment to the secondary resin layer, the lateral pressure characteristics of the optical fiber can be improved.

### [Details of embodiments of the present disclosure]

Specific examples of the resin composition and the optical fiber according to embodiments of the present disclosure will be described with reference to the drawings as necessary. Note that, the present disclosure is not limited to these illustrations but is indicated by the claims and intended to include meanings equivalent to the claims and all modifications within the claims. In the following description, the same reference numerals are given to the same elements in the description of the drawing, and redundant description will be omitted. In the present specification, (meth)acrylate means an acrylate or its corresponding methacrylate. The same applies to other similar expressions such as (meth)acryloyl.

### (Resin composition)

The resin composition according to the present embodiment is a resin composition containing a photopolymerizable compound, a photopolymerization initiator, and surface-treated titanium oxide particles, in which a content of the surface-treated titanium oxide particles is 0.6% by mass or more and less than 25% by mass based on the total amount of the resin composition.

The surface-treated titanium oxide particles according to the present embodiment are particles in which titanium oxide is surface-treated with an inorganic substance, and have excellent dispersibility in the resin composition.

Examples of the inorganic substance used for the surface treatment include aluminum oxide, silicon dioxide, and zirconium dioxide. When the surface-treated titanium oxide particles have a surface-treated layer containing at least one selected from the group consisting of aluminum oxide, silicon dioxide, and zirconium dioxide, dispersibility can be further improved. The surface-treated layer may be formed on at least a portion of the surface of titanium oxide, and may be formed on the entire surface of titanium oxide. The surface-treated layer is formed by the surface treatment of titanium oxide.

The amount of the surface-treated layer in the surface-treated titanium oxide particles may be 1% by mass or more, 1.5% by mass or more, or 2% by mass or more from the viewpoint of improving dispersibility, and may be 10% by mass or less, 9% by mass or less, or 8% by mass or less from the viewpoint of increasing hiding power. The amount of the surface-treated layer can be calculated by measuring the amount of the titanium element and an inorganic element other than titanium contained in the surface-treated titanium oxide particles using inductively coupled mass spectrometry (ICP-MS).

The average primary particle diameter of the surface-treated titanium oxide particles may be 300 nm or less, 295 nm or less, or 290 nm or less, from the viewpoint of further improving the lateral pressure resistance of the coating resin layer. From the viewpoint of increasing hiding power, the average primary particle diameter of the surface-treated titanium oxide particles may be 100 nm or more, 150 nm or more, or 200 nm or more, and is preferably 200 nm or more and 300 nm or less. The average primary particle diameter can be measured, for example, by image analysis of electron micrographs, a light scattering method, a BET method, or the like.

The content of the surface-treated titanium oxide particles may be 0.8% by mass or more, 1% by mass or more, 1.5% by mass or more, 2% by mass or more, or 3% by mass or more, based on the total amount of the resin composition, from the viewpoint of improving the visibility of the resin layer. The content of the surface-treated titanium oxide particles may be 24% by mass or less, 20% by mass or less, 18% by mass or less, or 16% by mass or less, based on the total amount of the resin composition, from the viewpoint of increasing the curability of the resin composition.

From the viewpoint of adjusting a Young's modulus, the photopolymerizable compound according to the present embodiment can contain at least one (meth)acrylate selected from the group consisting of urethane (meth)acrylate and epoxy (meth)acrylate, and preferably contains urethane (meth)acrylate and epoxy (meth)acrylate.

As the urethane (meth)acrylate, a urethane oligomer obtained by reacting a polyol compound, a polyisocyanate compound, and a hydroxyl group-containing (meth)acrylate compound can be used. The urethane (meth)acrylate may be used as a mixture of two or more kinds thereof.

Examples of the polyol compound include polytetramethylene glycol, polypropylene glycol, and bisphenol A-ethylene oxide addition diol. Examples of the polyisocyanate compound include 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol mono(meth)acrylate.

From the viewpoint of adjusting the Young's modulus of the resin layer, the number average molecular weight (Mn) of the polyol compound may be 300 or more and 3000 or less, 400 or more and 3000 or less, or 500 or more and 2500 or less.

As a catalyst when the urethane (meth)acrylate is synthesized, an organotin compound is generally used. Examples of the organotin compound include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the viewpoint of easy availability or catalyst performance, it is preferable to use dibutyltin dilaurate or dibutyltin diacetate as a catalyst.

A lower alcohol having 5 or less carbon atoms may be used when the urethane (meth)acrylate is synthesized. Examples of the lower alcohol include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol.

Examples of the epoxy (meth)acrylate include an aliphatic epoxy (meth)acrylate and an aromatic epoxy (meth)acrylate. The aliphatic epoxy (meth)acrylate means an epoxy (meth)acrylate having no aromatic ring, and the aromatic epoxy (meth)acrylate means an epoxy (meth)acrylate having an aromatic ring.

As the aliphatic epoxy (meth)acrylate, a reaction product of an aliphatic epoxy compound having two or more glycidyl groups and a compound having a (meth)acryloyl group such as (meth)acrylic acid can be used.

From the viewpoint of increasing the toughness of the resin layer, the aliphatic epoxy (meth)acrylate preferably has an ethylene oxide group or a propylene oxide group. Examples of the aliphatic epoxy (meth)acrylate include a (meth)acrylic acid adduct of propylene glycol diglycidyl ether, a (meth)acrylic acid adduct of polypropylene glycol diglycidyl ether, a (meth)acrylic acid adduct of ethylene glycol diglycidyl ether, and a (meth)acrylic acid adduct of polyethylene glycol diglycidyl ether.

Examples of commercially available products of the aliphatic epoxy (meth)acrylates include trade names "Epoxy Ester 40EM", "Epoxy Ester 70PA", "Epoxy Ester 200PA", and "Epoxy Ester 80MFA" manufactured by Kyoeisha Chemical Co., Ltd.

As the aromatic epoxy (meth)acrylate, a reaction product of an aromatic epoxy compound having two or more glycidyl groups and a compound having a (meth)acryloyl group such as (meth)acrylic acid can be used. Examples of the aromatic epoxy (meth)acrylate include a (meth)acrylic acid adduct of bisphenol A diglycidyl ether.

From the viewpoint of increasing the strength of the resin layer, the content of the epoxy (meth)acrylate may be 10% by mass or more and 70% by mass or less, 20% by mass or more and 60% by mass or less, or 30% by mass or more and 50% by mass or less, based on the total amount of the photopolymerizable compound.

The photopolymerizable compound according to the present embodiment can contain a photopolymerizable compound (hereinafter, referred to as "monomer") other than the urethane (meth)acrylate and the epoxy (meth)acrylate.

As the monomer, a monofunctional monomer having one polymerizable group and a polyfunctional monomer having two or more polymerizable groups can be used. The monomer may be used as a mixture of two or more kinds thereof.

Examples of the monofunctional monomer include (meth)acrylate-based monomers such as methyl (meth)acrylate, ethyl (meth)acrylate, propyl (meth)acrylate, n-butyl (meth)acrylate, s-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxy benzyl acrylate, phenoxy diethyleneglycol acrylate, phenoxy polyethylene glycol acrylate, 4-tert-butylcyclohexanol acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxypolyethylene glycol (meth)acrylate, and isobomyl (meth)acrylate; carboxy group-containing monomers such as (meth)acrylic acid, a (meth)acrylic acid dimer, carboxyethyl (meth)acrylate, carboxypentyl (meth)acrylate, and ω-carboxy-polycaprolactone (meth)acrylate; heterocycle-containing monomers such as N-(meth)acryloylmorpholine, N-vinylpyrrolidone, N-vinylcaprolactam, N-(meth)acryloylpiperidine, N-(meth)acryloylpyrrolidine, 3-(3-pyridine)propyl (meth)acrylate, and cyclic trimethylolpropane formal acrylate; maleimide-based monomers such as maleimide, N-cyclohexylmaleimide, and N-phenylmaleimide; amide-based monomers such as (meth)acrylamide, N,N-dimethyl (meth)acrylamide, N,N-diethyl (meth)acrylamide, N-hexyl (meth)acrylamide, N-methyl (meth)acrylamide, N-ethyl (meth)acrylamide, N-butyl (meth)acrylamide, N-methylol (meth)acrylamide, and N-methylolpropane (meth)acrylamide; aminoalkyl (meth)acrylate-based monomers such as aminoethyl (meth)acrylate, aminopropyl (meth)acrylate, N,N-dimethylaminoethyl (meth)acrylate, and tert-butylaminoethyl (meth)acrylate; and succinimide-based monomers such as N-(meth)acryloyloxymethylene succinimide, N-(meth)acryloyl-6-oxyhexamethylene succinimide, and N-(meth)acryloyl-8-oxyoctamethylene succinimide.

Examples of the polyfunctional monomer include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of an alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyldiol di(meth)acrylate, 3-ethyl-1,8-octanediol di(meth)acrylate, an EO adduct di(meth)acrylate of bisphenol A, trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl]isocyanurate.

The photopolymerization initiator can be appropriately selected from known radical photopolymerization initiators for use. Examples of the photopolymerization initiator include 1-hydroxycyclohexyl phenyl ketone (Omnirad 184, manufactured by IGM Resins), 2,2-dimethoxy-2-phenylacetophenone, 1-(4-isopropylphenyl)-2-hydroxy-2-methylpropane-1-one, bis(2,6-dimethoxybenzoyl)-2,4,4-trimethylpentylphosphine oxide, 2-methyl-1-[4-(methylthio)phenyl]-2-morpholino-propane-1-one (Omnirad 907, manufactured by IGM Resins), 2,4,6-trimethylbenzoyl diphenylphosphine oxide (Omnirad TPO, manufactured by IGM Resins), and bis(2,4,6-trimethylbenzoyl)phenylphosphine oxide (Omnirad 819, manufactured by IGM Resins).

The content of the photopolymerization initiator may be 1% by mass or more and 12% by mass or less, 2% by mass or more and 10% by mass or less, or 3% by mass or more and 8% by mass or less, based on the total amount of the photopolymerizable compound. That is, the content of the photopolymerization initiator may be 1 part by mass or more and 12 parts by mass or less, 2 parts by mass or more and 10 parts by mass or less, or 3 parts by mass or more and 8 parts by mass or less, with respect to 100 parts by mass of the total amount of the photopolymerizable compound.

The resin composition may further contain a silane coupling agent, a leveling agent, an antifoaming agent, an antioxidant, a sensitizer, and the like.

The silane coupling agent is not particularly limited as long as it causes no inhibition in curing of the resin composition. Examples of the silane coupling agent include tetramethyl silicate, tetraethyl silicate, mercaptopropyl trimethoxysilane, vinyltrichlorosilane, vinyltriethoxysilane, vinyltris(β-methoxy-ethoxy)silane, β-(3,4-epoxylcyclohexyl)-ethyltrimethoxysilane, dimethoxydimethylsilane, diethoxydimethylsilane, 3-acryloxypropyl trimethoxysilane, γ-glycidoxypropyl trimethoxysilane, γ-glycidoxypropylmethyl diethoxysilane, γ-methacryloxypropyl trimethoxysilane, N-(β-aminoethyl)-γ-aminopropyl trimethoxysilane, N-(β-aminoethyl)-γ-aminopropyltrimethyl dimethoxysilane, N-phenyl-γ-aminopropyl trimethoxysilane, γ-chloropropyl trimethoxysilane, γ-mercaptopropyl trimethoxysilane, γ-aminopropyl trimethoxysilane, bis-[3-(triethoxysilyl)propyl]tetrasulfide, bis-[3-(triethoxysilyl)propyl] disulfide, γ-trimethoxysilylpropyl dimethylthiocarbamyl tetrasulfide, and γ-trimethoxysilylpropyl benzothiazyl tetrasulfide.

The Young's modulus of a resin film obtained by curing the resin composition according to the present embodiment at 23°C is preferably 1100 MPa or more, more preferably 1200 MPa or more and 2700 MPa or less, and further preferably 1300 MPa or more and 2600 MPa or less. When the Young's modulus of the resin film is 1100 MPa or more, the lateral pressure characteristics are easily improved, and when the Young's modulus of the resin film is 2700 MPa or less, appropriate toughness can be imparted to the coating resin layer, so that cracks and the like are difficult to occur in the coating resin layer.

The resin composition according to the present embodiment can be suitably used as a colored coating material for an optical fiber. By forming an outermost layer of the coating resin layer using the colored coating material containing the resin composition according to the present embodiment, the lateral pressure characteristics of the optical fiber can be improved.

### (Optical fiber)

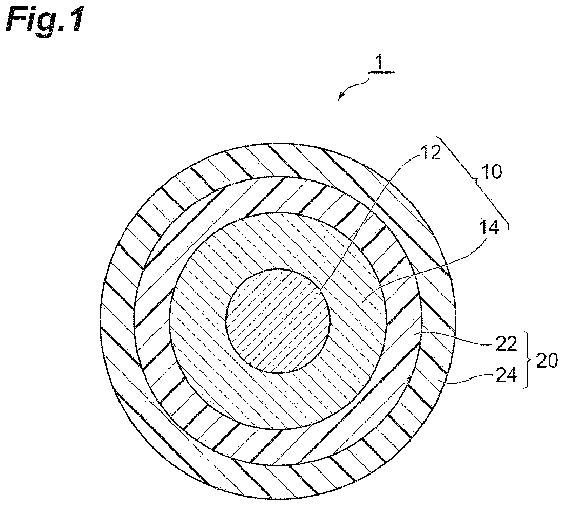

FIG. 1 is a schematic cross-sectional view illustrating a configuration of an optical fiber according to an embodiment. As illustrated in FIG. 1, an optical fiber 1 of the present embodiment includes a glass fiber 10 and a coating resin layer 20 being in contact with the glass fiber 10 and covering an outer periphery of the glass fiber 10.

The glass fiber 10 is a light guiding optical transmission medium that transmits light introduced to the optical fiber 1. The glass fiber 10 is a member made of glass, and is configured, for example, with silica (SiO₂) glass as a base material (main component). The glass fiber 10 includes a core 12 and a cladding 14 covering the core 12. The glass fiber 10 transmits light introduced to the optical fiber 1. The core 12 is provided, for example, in an area including a center axis line of the glass fiber 10. The core 12 is made of, for example, pure SiO₂ glass, or SiO₂ glass containing GeO₂, a fluorine element, or the like. The cladding 14 is provided in an area surrounding the core 12. The cladding 14 has a refractive index lower than a refractive index of the core 12. The cladding 14 is made of, for example, pure SiO₂ glass, or SiO₂ glass added with a fluorine element. The outer diameter of the glass fiber 10 is about 100 µm to 125 µm, and the diameter of the core 12 constituting the glass fiber 10 is about 7 µm to 15 µm.

The coating resin layer 20 is an ultraviolet curable resin layer covering the cladding 14. The coating resin layer 20 includes a primary resin layer 22 coating an outer periphery of the glass fiber 10, and a secondary resin layer 24 coating an outer periphery of the primary resin layer 22. The primary resin layer 22 is in contact with an outer peripheral surface of the cladding 14 and coats the entire cladding 14. The secondary resin layer 24 is in contact with an outer peripheral surface of the primary resin layer 22 and coats the entire primary resin layer 22. The thickness of the primary resin layer 22 is, for example, 10 µm or more and 50 µm or less. The thickness of the secondary resin layer 24 is, for example, 10 µm or more and 40 µm or less.

The resin composition according to the present embodiment can be applied to the secondary resin layer 24. The secondary resin layer 24 can be formed by curing the resin composition containing the surface-treated titanium oxide particles. Since the secondary resin layer 24 contains a cured product of the resin composition according to the present embodiment, when the rewinding work is performed from the large bobbin to the small bobbin, it is possible to prevent the surface of the secondary resin layer from being damaged and the resin layer from being broken.

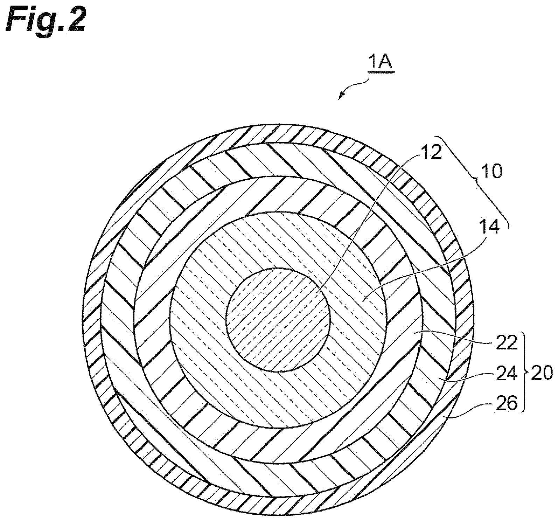

The coating resin layer 20 may further include a colored resin layer 26 coating an outer periphery of the secondary resin layer 24. FIG. 2 is a schematic cross-sectional view illustrating a configuration of an optical fiber according to an embodiment. As illustrated in FIG. 2, an optical fiber 1A of the present embodiment includes a glass fiber 10 and a coating resin layer 20 being in contact with the glass fiber 10 and covering an outer periphery of the glass fiber 10. The coating resin layer 20 includes a primary resin layer 22, a secondary resin layer 24, and a colored resin layer 26. The thickness of the colored resin layer 26 is, for example, 3 µm or more and 10 µm or less.

The resin composition according to the present embodiment can be applied to the colored resin layer 26. The colored resin layer 26 can be formed by curing the resin composition containing the surface-treated titanium oxide particles. When the colored resin layer 26 contains a cured product of the resin composition according to the present embodiment, the lateral pressure characteristics of the optical fiber can be improved. The secondary resin layer 24 in the optical fiber 1A may not contain surface-treated titanium oxide particles, and can be formed, for example, by curing a resin composition containing urethane (meth)acrylate, a monomer, and a photopolymerization initiator. For the resin composition for a secondary resin layer in this case, conventionally known techniques can be used.

The primary resin layer 22 can be formed, for example, by curing a resin composition containing urethane (meth)acrylate, a monomer, a photopolymerization initiator, and a silane coupling agent. For the resin composition for a primary resin layer, conventionally known techniques can be used. The urethane (meth)acrylate, the monomer, the photopolymerization initiator, and the silane coupling agent may be appropriately selected from the compounds exemplified above.

### Examples

The following will describe the present disclosure in further detail with showing results of evaluation tests using Examples according to the present disclosure and Comparative Examples. Note that, the present disclosure is not limited to these Examples.

### [Resin composition for colored resin layer]

As titanium oxide particles, surface-treated titanium oxide particles having a surface-treated layer containing aluminum oxide (Al₂O₃) shown in Table 1, and titanium oxide particles not subjected to a surface treatment were prepared. The amount of Al₂O₃ was calculated by quantifying the Ti element and the Al element contained in the surface-treated titanium oxide particles using ICP-MS.

**[Table 1]**

| | Ti-1 | Ti-2 | Ti-3 | Ti-4 | Ti-5 | Ti-6 |
|---|---|---|---|---|---|---|
| Average primary particle diameter (nm) | 210 | 250 | 280 | 210 | 210 | 210 |
| Amount (% by mass) of Al₂O₃ | 4.0 | 4.0 | 4.0 | 2.0 | 7.0 | - |

As a photopolymerizable compound, urethane acrylate (UA), which is a reaction product of polypropylene glycol having a molecular weight of 600, 2,4-tolylene diisocyanate, and 2-hydroxyethyl acrylate, epoxy acrylate (EA), which is a reaction product of an acrylic acid adduct of bisphenol A diglycidyl ether, isobomyl acrylate (IBXA), 2-phenoxyethyl acrylate (POA), and tripropylene glycol diacrylate (TPGDA) were prepared.

As a photopolymerization initiator, 2,4,6-trimethylbenzoyl diphenylphosphine oxide (Omnirad TPO) and 1-hydroxycyclohexyl phenyl ketone (Omnirad 184) were prepared.

Resin compositions of Test Examples 1 to 8 were produced as a resin composition for a colored resin layer. Test Examples 1 to 7 correspond to Examples, and Test Example 8 corresponds to Comparative Example.

### (Test Example 1)

After mixing the photopolymerizable compound and the photopolymerization initiator in the blending amount (parts by mass) shown in Table 2, mixing was performed so that the content of surface-treated titanium oxide particles (Ti-1) in the resin composition was 5% by mass, thereby preparing a resin composition.

### (Test Examples 2 to 5)

A resin composition was prepared in the same manner as in Test Example 1, except that the type of the surface-treated titanium oxide particles was changed.

### (Test Examples 6 and 7)

A resin composition was prepared in the same manner as in Test Example 1, except that the content of the surface-treated titanium oxide particles was changed.

### (Test Example 8)

A resin composition was prepared in the same manner as in Test Example 1, except that the surface-treated titanium oxide particles were changed to titanium oxide particles (Ti-6) not subjected to a surface treatment.

### (Young's modulus)

A resin composition was applied onto a polyethylene terephthalate (PET) film by using a spin coater, and then cured by using an electrodeless UV lamp system ("VPS600 (D valve)" manufactured by Heraeus K. K.) under the conditions of 1000 ± 100 mJ/cm² to form a resin layer having a thickness of 50 ± 5 µm on the PET film. The resin layer was peeled off from the PET film to obtain a resin film.

The resin film was punched into a dumbbell shape of JIS K 7127 Type 5, and pulled under the conditions of 23 ± 2°C and 50 ± 10% RH using a tensile tester at a tension rate of 1 mm/min and a gauge line distance of 25 mm to obtain a stress-strain curve. The Young's modulus was determined from 2.5% secant line.

### [Resin composition for primary resin layer]

75 parts by mass of urethane acrylate, which is a reaction product of polypropylene glycol having a molecular weight of 2000, 2,4-tolylene diisocyanate, 2-hydroxyethyl acrylate, and methanol, 14 parts by mass of nonylphenol EO-modified acrylate, 7 parts by mass of N-vinylcaprolactam, 2 parts by mass of 1,6-hexanediol diacrylate, 1 part by mass of Omnirad TPO, and 1 part by mass of γ-mercaptopropyl trimethoxysilane were mixed to prepare a resin composition P.

### [Resin composition for secondary resin layer]

60 parts by mass of urethane acrylate, which is a reaction product of polypropylene glycol having a molecular weight of 1000, isophorone diisocyanate, and 2-hydroxyethyl acrylate, 19 parts by mass of isobomyl acrylate, 20 parts by mass of trimethylolpropane triacrylate, and 1 part by mass of Omnirad TPO were mixed to prepare a resin composition S.

### [Production of optical fiber]

A primary resin layer having a thickness of 17.5 µm was formed using the resin composition P on the outer periphery of the glass fiber having a diameter of 125 µm and composed of a core and a cladding, and a secondary resin layer having a thickness of 15 µm was further formed using the resin composition S on the outer periphery thereof, thereby producing an optical fiber. Next, after temporarily winding the optical fiber, a colored resin layer having a thickness of 5 µm was formed using the resin composition of each of Test Examples 1 to 8 on the outer periphery of the secondary resin layer while feeding out the optical fiber again by a coloring machine, thereby producing an optical fiber (hereinafter, referred to as "colored optical fiber") having a diameter of 200 µm and having the colored resin layer. The linear speed at the time of forming each resin layer was set to 1500 m/min.

### (Lateral pressure characteristics)

The transmission loss of light with a wavelength of 1550 nm was measured by the OTDR (Optical Time Domain Reflectometer) method when the colored optical fiber was wound in a single layer on a bobbin having a diameter of 280 mm with its surface covered with sandpaper. Furthermore, the transmission loss of light with a wavelength of 1550 nm was measured by the OTDR method when the colored optical fiber was wound in a single layer on a bobbin having a diameter of 280 mm without sandpaper. A difference in the measured transmission loss was determined, a case where the transmission loss difference was 0.6 dB/km or less was evaluated as "A", and a case where the transmission loss difference was more than 0.6 dB/km was evaluated as "B".

**[Table 2]**

| Test Example | | 1 | 2 | 3 | 5 | 5 | 6 | 7 | 8 |
|---|---|---|---|---|---|---|---|---|---|
| TiO₂ | Type | Ti-1 | Ti-2 | Ti-3 | Ti-4 | Ti-5 | Ti-1 | Ti-1 | Ti-6 |
| | Content | 5 | 5 | 5 | 5 | 5 | 1 | 15 | 5 |
| UA | | 25 | 25 | 25 | 25 | 25 | 25 | 25 | 25 |
| EA | | 36 | 36 | 36 | 36 | 36 | 36 | 36 | 36 |
| IBXA | | 17 | 17 | 17 | 17 | 17 | 17 | 17 | 17 |
| POA | | 22 | 22 | 22 | 22 | 22 | 22 | 22 | 22 |
| TPGDA | | 5 | 5 | 5 | 5 | 5 | 5 | 5 | 5 |
| Omnirad 184 | | 5 | 5 | 5 | 5 | 5 | 5 | 5 | 5 |
| Omnirad TPO | | 1 | 1 | 1 | 1 | 1 | 1 | 1 | 1 |
| Young's modulus (MPa) | | 1500 | 1500 | 1500 | 1500 | 1500 | 1600 | 1400 | 1500 |
| Lateral pressure characteristics | | A | A | A | A | A | A | A | B |

### Reference Signs List

1, 1A: Optical fiber
10: Glass fiber
12: Core
14: Cladding
20: Coating resin layer
22: Primary resin layer
24: Secondary resin layer
26: Colored resin layer.

## Claims

1. A resin composition for optical fiber coating, the resin composition comprising a photopolymerizable compound, a photopolymerization initiator, and surface-treated titanium oxide particles,
wherein a content of the surface-treated titanium oxide particles is 0.6% by mass or more and less than 25% by mass based on the total amount of the resin composition.

2. The resin composition according to claim 1, wherein the surface-treated titanium oxide particles have a surface-treated layer containing at least one selected from the group consisting of aluminum oxide, silicon dioxide, and zirconium dioxide.

3. The resin composition according to claim 2, wherein an amount of the surface-treated layer in the surface-treated titanium oxide particles is 1% by mass or more and 10% by mass or less.

4. The resin composition according to any one of claims 1 to 3, wherein an average primary particle diameter of the surface-treated titanium oxide particles is 300 nm or less.

5. The resin composition according to any one of claims 1 to 4, wherein the photopolymerizable compound contains urethane (meth)acrylate and epoxy (meth)acrylate.

6. A colored coating material for an optical fiber, the colored coating material comprising the resin composition according to any one of claims 1 to 5.

7. An optical fiber comprising:
a glass fiber including a core and a cladding;
a primary resin layer being in contact with the glass fiber and coating the glass fiber;
a secondary resin layer coating the primary resin layer; and
a colored resin layer coating the secondary resin layer,
wherein the colored resin layer contains a cured product of the resin composition according to any one of claims 1 to 5.

8. An optical fiber comprising:
a glass fiber including a core and a cladding;
a primary resin layer being in contact with the glass fiber and coating the glass fiber; and
a secondary resin layer coating the primary resin layer,
wherein the secondary resin layer contains a cured product of the resin composition according to any one of claims 1 to 5.
